# EUROPEAN PATENT SPECIFICATION

(11) **EP 4 157 772 B1**
(45) Date of publication and mention of the grant of the patent: **22.01.2025**
(21) Application number: 20728477.9
(22) Date of filing: 26.05.2020
(51) Int. Cl.: B66B 1/34

(54) **AN ELEVATOR SYSTEM AND A METHOD FOR TRACKING OBJECTS**
AUFZUGSSYSTEM UND VERFAHREN ZUR VERFOLGUNG VON OBJEKTEN
SYSTÈME D'ASCENSEUR ET PROCÉDÉ DE SUIVI D'OBJETS

(43) Date of publication of application: 05.04.2023
(73) Proprietor: KONE Corporation, 00330 Helsinki (FI)
(72) Inventor: ÖFVERSTEN, Janne, 00330 HELSINKI (FI)
(74) Representative: Berggren Oy
(86) International application number: PCT/EP2020/064528
(87) International publication number: WO 2021/239216

(56) References cited:
- EP-A1- 3 536 645
- EP-A1- 3 578 492
- EP-A1- 3 643 661
- JP-A- 2015 124 061

## Description

### TECHNICAL FIELD

The invention concerns in general the technical field of elevator systems. Especially the invention concerns elevator systems having an object tracking functionality.

### BACKGROUND

Tracking of objects, such as material, people and/or equipment, locating or moving inside buildings may be used to monitor flow of the objects inside the buildings. Typically, the object tracking is especially important for construction and renovation sites, where a lot of construction material goes into the building and waste material comes out. For example, understanding the material flow better enables better optimization material flow and synchronization of the material flow to people flow. Typically, the object tracking inside the buildings may be based on indoor positioning solutions, e.g. Wi-Fi or Bluetooth based solutions. The monitoring the material flow and especially monitoring the people flow are important aspects from the viewpoint of an operation of elevator systems arranged inside the buildings for conveying objects between floors of the building.

A patent publication EP 3 643 661 A1 discloses a method of operating an elevator call control system that may include an indoor positioning system.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present an elevator system and a method for tracking objects. Another objective of the invention is that the elevator system and the method for tracking objects enable monitoring flow of objects inside a building.

The objectives of the invention are reached by an elevator system and a method as defined by the respective independent claims.

According to a first aspect, an elevator system having an object tracking functionality is provided, wherein the elevator system comprises: at least one elevator shaft along which at least one elevator car is configured to travel between a plurality of floors; at least one elevator interface device on each floor (106a-106n) comprising one receiver device of the plurality of receiver devices (110a-110n), wherein the plurality of receiver devices (110a-110n) form a wireless mesh network (112); a computing unit; at least one gateway device for providing connection between the wireless mesh network and the computing unit; and one or more tag devices, each attached to an object, wherein each of the plurality of receiver devices is configured to: monitor advertisement signals transmitted by the one or more tag devices within an operational range of said receiver device, wherein each advertisement signal comprises an identifier for identifying the tag device transmitting said advertisement signal; and provide device data associated with each detected advertisement signal to the computing unit via the wireless mesh network and the at least one gateway device, wherein the device data comprises signal strength value of the detected advertisement signal and the identifier of the detected advertisement signal, wherein the computing unit is configured to define a location of the object based on the provided device data associated with the tag device attached to said object. The computing unit may be configured to define the location of the object based on the signal strength values comprised in the device data provided by at least three receiver devices.

In a further embodiment, the computing unit may be configured to filter the signal strength values before defining the location of the object.

The device data may further comprise a time stamp indicating a detection time of the advertisement signal, wherein the computing unit may further be configured to define the location of the object at specific one or more instants of time and/or during a specific period of time.

The one or more tag devices may each further comprise one or more sensor devices configured to provide environmental related information about the environment of said tag device, wherein the device data may further comprise the environmental related information.

Each receiver device may be powered by an elevator control bus.

The computing unit may be an elevator control unit or an external computing unit connected to the elevator system via the at least one gateway device. The wireless mesh network may be based on a Bluetooth communication protocol.

According to a second aspect, a method for object tracking with an elevator system having an object tracking functionality is provided, wherein the method comprises: monitoring, by each of a plurality of receiver devices, advertisement signals transmitted, by one or more tag devices each attached to an object, within an operational range of said receiver device, wherein, wherein at least one elevator interface device of the elevator system on each floor comprises one receiver device of the plurality of receiver devices, and wherein each advertisement signal comprises an identifier for identifying the tag device transmitting said advertisement signal; providing, by each of the plurality receiver device, device data associated with each detected advertisement signal to a computing unit via a wireless mesh network formed by the plurality of receiver devices and via at least one gateway device, which provides connection between the wireless communication network and the computing unit, wherein the device data comprises signal strength value of the detected advertisement signal and the identifier of the detected advertisement signal; and defining, by the computing unit, a location of the object based on the provided device data associated with the tag device attached to said object.

The defining of the location of the object may comprise defining the location of the object based on the signal strength values comprised in the device data provided by at least three receiver devices.

In a further embodiment, the method may further comprise filtering the signal strength values before defining the location of the object.

The device data may further comprise a time stamp indicating a detection time of the advertisement signal, wherein the method may further comprise defining, by the computing unit, the location of the object at specific one or more instants of time and/or during a specific period of time.

In a further embodiment, the method may further comprise providing, by one or more sensor devices of the one or more tag devices, environmental related information about the environment of said tag device, wherein the device data may further comprise the environmental related information.

Each receiver device may be powered by an elevator control bus.

The computing unit may be an elevator control unit or an external computing unit connected to the elevator system via the at least one gateway device.

The wireless mesh network may be based on a Bluetooth communication protocol.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of an elevator system according to the invention.
Figure 2 illustrates schematically an example of a method according to the invention.
Figure 3 illustrates schematically an example of components of a computing unit according to the invention.

### DESCRIPTION OF THE EXEMPLIFYING EMBODIMENTS

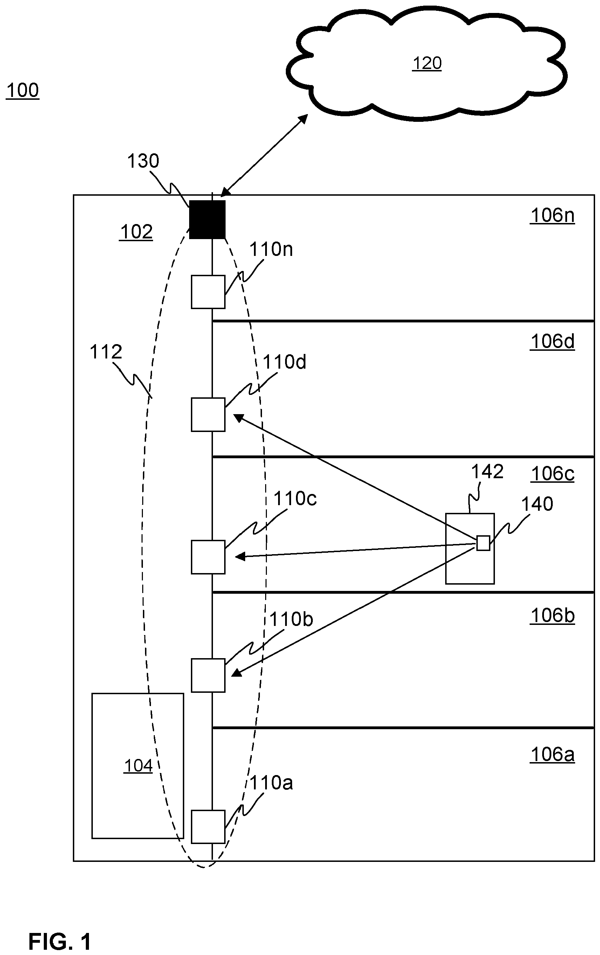

Figure 1 illustrates schematically an example of an elevator system 100 having an object tracking functionality according to the invention. The object tracking functionality of the elevator system 100 enables to monitor flow of the objects 142 inside a building in which the elevator system 100 resides. The flow of the objects 142, e.g. material, is especially important for construction and renovation sites where a lot of construction material goes into the building and waste comes out. Understanding the material flow better enables better optimization and material flow synchronization to people flow. The elevator system 100 comprises at least one elevator shaft 102 along which at least one elevator car 104 is configured to travel between a plurality of floors, i.e. landings, 106a-106n, a plurality of receiver devices 110a-110n forming a wireless mesh network 112, a computing unit 120, at least one gateway device 130 for providing connection between the wireless mesh network 112 and the computing unit 120, and one or more tag devices 140. The elevator system 100 may further comprise one or more other know elevator related entities, e.g. hoisting machine, elevator control unit, at least one elevator interface device, etc.

Each of the plurality of receiver devices 110a-110n forming the wireless mesh network 112 may communicate with each other. The wireless mesh network 112 may relay messages by receiver device 110a-110n to receiver device 110a-110n until the message reaches the receiver device 110a-110n to which the message is intended. The messages may comprise data, e.g. device data as will be described later. The wireless mesh network 112 may be based on a Bluetooth communication protocol, e.g. Bluetooth low energy (BLE) protocol. The plurality of receiver devices 110a-110n may be Bluetooth receiver devices and the one or more tag devices 140 may be Bluetooth tag devices. This means that the communication between the plurality of receiver devices 110a-110n each other and the communication between the plurality of receiver devices 110a-110n and the one or more tag devices 140 may be based on the Bluetooth communication protocol. The at least one gateway device 130 may be part of the wireless mesh network 112, i.e. the at least one gateway device 130 may be a Bluetooth gateway device and the communication between the at least one gateway device 130 and the plurality of receiver devices 110a-110n forming the wireless mesh network 112 may be based on the Bluetooth communication protocol as illustrated in the example of Figure 1. Alternatively, the at least one gateway device 130 may be coupled by a wired connection to at least one of the plurality of receiver devices 110a-110n and the communication between the at least one gateway device 130 and the wireless mesh network 112 via the at least one of the plurality of receiver devices 110a-110n may be based on one or more known wired communication technologies.

At least one elevator interface device of the elevator system 100 on each floor 106a-106n comprises one receiver device of the plurality of receiver devices 110a-110b. In other words, each of the plurality of receiver devices 110a-110n is arranged on each floor 106a-106n inside an elevator interface device. The at least one elevator interface device, e.g. a floor operating panel, a landing call panel or a destination operation panel, is capable of generating elevator calls for driving the at least one elevator car. Each receiver device of the plurality of receiver devices 110a-110n may be powered by an elevator control bus. Arranging the plurality of receiver devices 110a-110n inside the elevator interface devices enables that the plurality of receiver devices 110a-110n may be integrated to the elevator interface devices, which are already existing entities of the elevator system 100, which in turn enables cheaper hardware costs and easy and quick installation of the plurality of receiver devices 110a-110n. The integration of the plurality of receiver devices 110a-110n into the elevator interface devices enables that there is no need to have visible receiver devices on walls and/or ceilings of the building, which may reduce vandalism directed to the receiver devices 110a-110n. For sake of clarity the elevator interface devices are not shown in Figure 1. The plurality of receiver devices 110a-110n may also be already existing receiver devices of the elevator system 100 configured to receive one or more radio signals transmitted by one or more wireless devices, e.g. wireless elevator call buttons.

Each of the one or more tag devices 140 is attached to, i.e. carried by, an object 142 to be tracked. The objects 142 may e.g. be material, a people, and/or equipment. The one or more tag device 140 may also be any device equipped with a wireless transmitter unit, e.g. a Bluetooth transmitter unit. The one or more tag devices 140 may also be integrated to a tool; a wearable device; such as a helmet, watch, etc., a mobile terminal device; etc.; carried by people to be tracked. The objects 142 to be tracked may locate or move inside the building. Each tag device 140 is configured to transmit advertisement signals, i.e. radio signals, at regular intervals, e.g. every few seconds. Each advertisement signal comprises at least an identifier, e.g. a unique ID, for identifying the tag device 140 transmitting said advertisement signal.

The computing unit 120 may be an elevator control unit or an external computing unit connected to the elevator system 100 via the at least one gateway device 130 as shown in the example of Figure 1. The external entity herein means an entity that locates separate from elevator system 100. The computing unit 120 is communicatively coupled to the at least one gateway device 130. The communication between the computing unit 120 and the at least one gateway device 130 may be based on one or more known communication technologies, either wired or wireless, e.g. cellular communication technology. The implementation of the computing unit 120 may be done as a stand-alone computing entity or as a distributed computing environment between a plurality of stand-alone computing entities, such as a plurality of servers providing distributed computing resource.

The plurality of receiver devices 110a-110n is configured to monitor the advertisement signals transmitted by the one or more tag devices 140 within an operational range, i.e. radio range, of said receiver device 110a-110n. The plurality of receiver devices 110a-110n is further configured to provide the device data associated with each detected advertisement signal to the computing unit 120 via the wireless mesh network 112 and the at least one gateway device 130. In other words, each receiver device of the plurality of receiver devices 110a-110b is configured to provide the device data of each detected advertisement signal first to the at least one gateway device 130 via the wireless mesh network 112 and the at least one gateway device 130 then provides the device data to the computing unit 120. The device data comprises signal strength value of the detected, i.e. received, advertisement signal and the identifier of the detected advertisement signal. The signal strength value may be defined, by the receiving receiver device 110a-110n, based on a Received Signal Strength Indicator (RSSI) value.

The computing unit 120 is configured to define, i.e. estimate, a location of the object 142 based on the provided device data associated with the tag device 140 attached to said object 142. The computing unit 120 may be configured to define the location of the object 142 to which the tag device 140 is attached based on the signal strength values comprised in the device data provided by at least three receiver devices 110a-110n of the plurality of receiver devices 110a-110n. In other words, at least three receiver devices 110a-110n receives the advertisement signal transmitted by the tag device 140 attached to the object 142 and the at least three receiver devices 110a-110n provides to the computing unit 120 via the wireless mesh network 112 and the at least one gateway device 130 the device data comprising the received signal strength value of said advertisement signal from the tag device 140 attached to the object 142. The computing unit 120 may be configured to define the location of the object 142 to which the tag device 140 is attached based on the signal strength values of said advertisement signal from the tag device 140 provided by the at least three receiver devices 110a-110n.

The signal strength value of the advertisement signal attenuates relative to distance, if there are no obstacles, e.g. walls, ceilings, floors, and/or people, on a signal path of the advertisement signal. However, the obstacles on the signal path may cause additional attenuation to the signal strength value. Alternatively or in addition, reflections of the signal may have an effect on the signal strength value. Alternatively or in addition, a position of an antenna of the tag device 140 may cause variation to the signal strength value.

According to an exemplifying embodiment of the invention, the computing unit 120 may be configured to compare the signal strength values of the advertisement signal from the tag device 140 received by the at least three receiver devices 110a-110n to define the location of the tag device 140, i.e. the floor 106a-106n where the tag device 140 locates. This enables that the attenuation caused by the stationary obstacles e.g. walls, ceilings, and/or floors, on the signal path may be taken into account in the definition of the location of the object 142. This enables that location of the object 142 to which the tag device 140 is attached may be defined with the accuracy of the floor 106a-106n, i.e. the floor 106a-106n, where the object 142 locates may be defined. For example, in the example of Figure 1, the receiver device 110d at the floor 106d receives an advertisement signal transmitted by the tag device 140 with -50 dBm signal strength, the receiver 110n at the floor 106n does not receive the advertisement signal transmitted by the tag device 140, the receiver device 110c at the floor 106c receives the advertisement signal transmitted by the tag device 140 with -20 dBm signal strength, and the receiver device 110b at the floor 106b receives the advertisement signal transmitted by the tag device 140 with -35 dBm signal strength. Based on the above information, i.e. device data received from the receiver devices 110b-110n, the computing unit 120 may define that the tag 140 attached to the object 142 locates at the floor 106c.

Alternatively or in addition, according to an exemplifying embodiment of the invention, the computing unit 120 may be configured to apply one or more intelligent algorithms, e.g. one or more machine learning algorithms, preferably together with historical device data gathered from the plurality of receiver devices 110a-110n over a longer period of time in order to define the location of the object 142 to which the tag device 140 is attached. The historical device data may be used as a training data to train the one or more intelligent algorithms. This improves the accuracy of the definition of the location of the tag device 140, which in turn enables that the location of the object 142 to which the tag device 140 is attached may be defined more accurately in addition to the definition of the floor 106a-106n, where the object 142 locates, e.g. more accurate location of the object 142 on said floor 106a-106n may be defined.

Alternatively or in addition, according to an exemplifying embodiment of the invention, the computing unit 120 may first be configured to define, i.e. estimate, an estimate distance between the tag device 140 attached to said object 142 and each receiver device 110a-110n from which the device data associated with the tag device 140 attached to said object 142 is provided based on the signal strength value comprised in the device data. The computing unit 120 may then be configured to define the location of the object 142 based on the defined estimate distances between the tag device 140 attached to said object 142 and at least three receiver devices 110a-110n from which the device data associated with the tag device 140 attached to said object 142 is provided. The computing unit 120 may use triangulation to define the location of the object 142 based on the defined distances between the tag device 140 attached to said object 142 and at least three receiver devices 110a-110n.

Alternatively or in addition, according to an exemplifying embodiment of the invention, the computing unit 120 may be configured to filter the received signal strength values before defining the location of the object 142 to reduce the variation of the signal strength value caused by movement of the tag device 140 attached to the object 142, the position of the antenna of the tag device 140, and/or moving obstacles, e.g. people. The filtering may for example be, but is not limited to, Kalman filtering.

According to an exemplifying embodiment of the invention, the device data may further comprise a time stamp indicating a detection time of the advertisement signal. This enables that the computing unit 120 may further be configured to define the location of the object 142 at specific one or more instants of time and/or during a specific period of time based on the time stamps comprised in the device data. This provides further information for monitoring the flow of the objects 142 inside the building in which the elevator system 100 resides.

Alternatively or in addition, according to an exemplifying embodiment of the invention, the one or more tag devices 140 may each further comprise one or more sensor devices configured to provide environmental related information, e.g. temperature, humidity, etc., about the environment of said tag device 140. The device data may further comprise the environmental related information. This provides further information for monitoring the flow of the objects 142 inside the building in which the elevator system 100 resides.

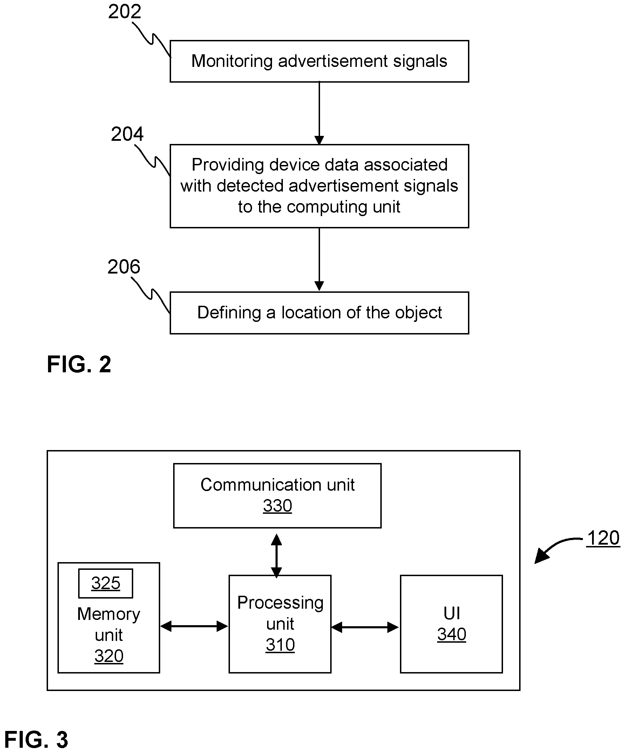

Next an example of the method for object tracking with the elevator system 100 having the object tracking functionality according to the invention is described by referring to Figure 2. Figure 2 schematically illustrates the invention as a flow chart.

At a step 202, each of the plurality of receiver devices 110a-110n monitors the advertisement signals transmitted by the one or more tag devices 140 within an operational range, i.e. radio range, of said receiver device 110a-110n. Each tag device 140 transmits advertisement signals, i.e. radio signals, at regular intervals, e.g. every few seconds. Each advertisement signal comprises an identifier for identifying the tag device 140 transmitting said advertisement signal.

At a step 204, each of the plurality of receiver devices 110a-110n further provides device data associated with each detected advertisement signal to the computing unit 120 via the wireless mesh network 112 and the at least one gateway device 130. In other words, each receiver device of the plurality of receiver device 110a-110b provides the device data of each detected advertisement signal first to the at least one gateway device 130 via the wireless mesh network 112 and the at least one gateway device 130 then provides the device data to the computing unit 120. The device data comprises signal strength value of the detected, i.e. received, advertisement signal and the identifier of the detected advertisement signal. The signal strength value may be defined, by the receiving receiver device 110a-110n, based on a Received Signal Strength Indicator (RSSI) value. The computing unit 120 receives the device data from the plurality of receiver devices.

At a step 206, the computing unit defines, i.e. estimates, a location of the object 142 based on the provided device data associated with the tag device 140 attached to said object 142. The computing unit 120 may define the location of the object 142 to which the tag device 140 is attached based on the signal strength values comprised in the device data provided by at least three receiver devices 110a-110n of the plurality of receiver devices 110a-110n. In other words, at least three receiver devices 110a-110n receives the advertisement signal transmitted by the tag device 140 attached to the object 142 and the at least three receiver devices 110a-110n provides to the computing unit 120 via the wireless mesh network 112 and the at least one gateway device 130 the device data comprising the received signal strength value of said advertisement signal from the tag device 140 attached to the object 142. The computing unit 120 may define the location of the object 142 to which the tag device 140 is attached based on the signal strength values of said advertisement signal from the tag device 140 provided by the at least three receiver devices 110a-110n.

The signal strength value of the advertisement signal attenuates relative to distance, if there are no obstacles, e.g. walls, ceilings, floors, and/or people, on a signal path of the advertisement signal. However, the obstacles on the signal path may cause additional attenuation to the signal strength value. Alternatively or in addition, reflections of the signal may have an effect on the signal strength value. Alternatively or in addition, a position of an antenna of the tag device 140 may cause variation to the signal strength value.

According to an exemplifying embodiment of the invention, at the step 206 the computing unit 120 may compare the signal strength values of the advertisement signal from the tag device 140 received by the at least three receiver devices 110a-110n to define the location of the tag device 140, i.e. the floor 106a-106n where the tag device 140 locates. This enables that the attenuation caused by the stationary obstacles e.g. walls, ceilings, and/or floors, on the signal path may be taken into account in the definition of the location of the object 142. This enables that location of the object 142 to which the tag device 140 is attached may be defined with the accuracy of the floor 106a-106n, i.e. the floor 106a-106n, where the object 142 locates may be defined.

Alternatively or in addition, according to an exemplifying embodiment of the invention, at the step 206 the computing unit 120 may apply one or more intelligent algorithms, e.g. one or more machine learning algorithms, preferably together with historical device data gathered from the plurality of receiver devices 110a-110n over a longer period of time in order to define the location of the object 142 to which the tag device 140 is attached. The historical device data may be used as a training data to train the one or more intelligent algorithms. This improves the accuracy of the definition of the location of the tag device 140, which in turn enables that the location of the object 142 to which the tag device 140 is attached may be defined more accurately in addition to the definition of the floor 106a-106n, where the object 142 locates, e.g. more accurate location of the object 142 on said floor 106a-106n may be defined.

Alternatively or in addition, according to an exemplifying embodiment of the invention, at the step 206 the computing unit 120 may first define, i.e. estimate, an estimate distance between the tag device 140 attached to said object 142 and each receiver device 110a-110n from which the device data associated with the tag device 140 attached to said object 142 is provided based on the signal strength value comprised in the device data. The computing unit 120 may then define the location of the object 142 based on the defined estimate distances between the tag device 140 attached to said object 142 and at least three receiver devices 110a-110n from which the device data associated with the tag device 140 attached to said object 142 is provided. The computing unit 120 may use triangulation to define the location of the object 142 based on the defined distances between the tag device 140 attached to said object 142 and at least three receiver devices 110a-110n.

Alternatively or in addition, according to an exemplifying embodiment of the invention, at the step 206 the computing unit 120 may filter the received signal strength values before defining the location of the object 142 to reduce the variation of the signal strength value caused by movement of the tag device 140 attached to the object 142, the position of the antenna of the tag device 140, and/or moving obstacles, e.g. people. The filtering may for example be, but is not limited to, Kalman filtering.

According to an exemplifying embodiment of the invention, the device data may further comprise a time stamp indicating a detection time of the advertisement signal. This enables that the computing unit 120 may further define at the step 206 the location of the object 142 at specific one or more instants of time and/or during a specific period of time based on the time stamps comprised in the device data. This provides further information for monitoring the flow of the objects 142 inside the building in which the elevator system 100 resides.

Alternatively or in addition, according to an exemplifying embodiment of the invention, one or more sensor devices of the one or more tag devices 140 may provide environmental related information, e.g. temperature, humidity, etc., about the environment of said tag device 140. The device data may further comprise the environmental related information. This provides further information for monitoring the flow of the objects 142 inside the building in which the elevator system 100 resides.

Figure 3 schematically illustrates an example of components of the computing unit 120 according to the invention. The computing unit 120 may comprise a processing unit 310 comprising one or more processors, a memory unit 320 comprising one or more memories, a communication unit 330 comprising one or more communication devices, and possibly a user interface (UI) unit 340. The memory unit 320 may store portions of computer program code 325 and any other data, and the processing unit 310 may cause the computing unit 120 to operate as described by executing at least some portions of the computer program code 325 stored in the memory unit 320. The communication unit 330 may be based on at least one known communication technologies, either wired or wireless, in order to exchange pieces of information as described earlier. The communication unit 330 provides an interface for communication with any external unit, such as the at least one gateway device 130, database and/or any external entities or systems. The communication unit 330 may comprise one or more communication devices, e.g. radio transceiver, antenna, etc. The user interface 340 may comprise I/O devices, such as buttons, keyboard, touch screen, microphone, loudspeaker, display and so on, for receiving input and outputting information. The computer program 325 may be stored in a non-statutory tangible computer readable medium, e.g. an USB stick or a CD-ROM disc.

The specific examples provided in the description given above should not be construed as limiting the applicability and/or the interpretation of the appended claims. Lists and groups of examples provided in the description given above are not exhaustive unless otherwise explicitly stated.

## Claims

1. An elevator system (100) having an object tracking functionality, the elevator system (100) comprising:
at least one elevator shaft (102) along which at least one elevator car (104) is configured to travel between a plurality of floors (106a-106n),
at least one elevator interface device on each floor (106a-106n) comprising one receiver device of a plurality of receiver devices (110a-110n), wherein the plurality of receiver devices (110a-110n) form a wireless mesh network (112),
a computing unit (120),
at least one gateway device (130) for providing connection between the wireless mesh network (112) and the computing unit (120), and
one or more tag devices (140), each attached to an object (142),
wherein each of the plurality of receiver devices (110a-110n) is configured to:
monitor advertisement signals transmitted by the one or more tag devices (140) within an operational range of said receiver device (110a-110n), wherein each advertisement signal comprises an identifier for identifying the tag device (140) transmitting said advertisement signal, and
provide device data associated with each detected advertisement signal to the computing unit (120) via the wireless mesh network (112) and the at least one gateway device (130), wherein the device data comprises signal strength value of the detected advertisement signal and the identifier of the detected advertisement signal,
wherein the computing unit (120) is configured to define a location of the object (142) based on the provided device data associated with the tag device (140) attached to said object (142).

2. The system (100) according to claim 1, wherein the computing unit (120) is configured to define the location of the object (142) based on the signal strength values comprised in the device data provided by at least three receiver devices (110a-110n).

3. The system (100) according to claim 1 or 2, wherein the computing unit (120) is configured to filter the signal strength values before defining the location of the object (142).

4. The system (100) according to any of the preceding claims, wherein the device data further comprises a time stamp indicating a detection time of the advertisement signal, and wherein the computing unit (120) is further configured to define the location of the object (142) at specific one or more instants of time and/or during a specific period of time.

5. The system (100) according to any of the preceding claims, wherein the one or more tag devices (140) each further comprises one or more sensor devices configured to provide environmental related information about the environment of said tag device (140), and wherein the device data further comprises the environmental related information.

6. The system (100) according to any of the preceding claims, wherein each receiver device (110a-110n) is powered by an elevator control bus.

7. The system (100) according to any of the preceding claims, wherein the computing unit (120) is an elevator control unit or an external computing unit connected to the elevator system (100) via the at least one gateway device (130).

8. The system (100) according to any of the preceding claims, wherein the wireless mesh network (112) is based on a Bluetooth communication protocol.

9. A method for object tracking with an elevator system (100) having an object tracking functionality, **characterized in that** the method comprises:
monitoring (202), by each of a plurality of receiver devices (110a-110n), advertisement signals transmitted, by one or more tag devices (140) each attached to an object (142), within an operational range of said receiver device (110a-110n), wherein at least one elevator interface device of the elevator system (100) on each floor (106a-106n) comprises one receiver device of the plurality of receiver devices (110a-110n), and wherein each advertisement signal comprises an identifier for identifying the tag device (140) transmitting said advertisement signal;
providing (204), by each of the plurality receiver devices (110a-110n), device data associated with each detected advertisement signal to a computing unit (120) via a wireless mesh network (112) formed by the plurality of receiver devices (110a-110n) and via at least one gateway device (130), which provides connection between the wireless communication network (112) and the computing unit (120), wherein the device data comprises signal strength value of the detected advertisement signal and the identifier of the detected advertisement signal; and
defining (206), by the computing unit (120), a location of the object (142) based on the provided device data associated with the tag device (140) attached to said object (142).

10. The method according to claim 9, wherein the defining of the location of the object (142) comprises defining the location of the object (142) based on the signal strength values comprised in the device data provided by at least three receiver devices (110a-110n).

11. The method according to claim 9 or 10, further comprising filtering the signal strength values before defining the location of the object (142).

12. The method according to any of claims 9 to 11, wherein the device data further comprises a time stamp indicating a detection time of the advertisement signal, and wherein the method further comprises defining, by the computing unit (120), the location of the object (142) at specific one or more instants of time and/or during a specific period of time.

13. The method according to any of claims 9 to 12, further comprising providing, by one or more sensor devices of the one or more tag devices (140), environmental related information about the environment of said tag device (140), wherein the device data further comprises the environmental related information.

14. The method according to any of claims 9 to 13, wherein each receiver device (110a-110n) is powered by an elevator control bus.

15. The method according to any of claims 9 to 14, wherein the computing unit (120) is an elevator control unit or an external computing unit connected to the elevator system (100) via the at least one gateway device (130).

16. The method according to any of claims 9 to 15, wherein the wireless mesh network (112) is based on a Bluetooth communication protocol.

## Patentansprüche

1. Aufzugssystem (100) mit einer Objektverfolgungsfunktion, wobei das Aufzugssystem (100) Folgendes umfasst:
mindestens einen Aufzugsschacht (102), entlang dem mindestens eine Aufzugskabine (104) zwischen mehreren Stockwerken (106a-106n) verfahren kann,
mindestens ein Aufzugsschnittstellengerät auf jedem Stockwerk (106a-106n), das ein Empfängergerät aus einer Vielzahl von Empfängergeräten (110a-110n) umfasst, wobei die mehreren Empfängergeräte (110a-110n) ein drahtloses Mesh-Netzwerk (112) bilden,
eine Recheneinheit (120),
mindestens ein Gateway-Gerät (130) zum Herstellen einer Verbindung zwischen dem drahtlosen Mesh-Netzwerk (112) und der Recheneinheit (120) und
ein oder mehrere Tag-Geräte (140), die jeweils an einem Objekt (142) angebracht sind,
wobei jedes der Vielzahl von Empfängergeräten (110a-110n) so konfiguriert ist, dass es:
Werbesignale überwacht, die von dem einen oder den mehreren Tag-Geräten (140) innerhalb einer Betriebsreichweite des Empfängergeräts (110a-110n) übertragen werden, wobei jedes Werbesignal eine Kennung zum Identifizieren des Tag-Geräts (140) umfasst, das das Werbesignal überträgt, und
Bereitstellung von Gerätedaten, die mit jedem erkannten Werbesignal verknüpft sind, an die Recheneinheit (120) über das drahtlose Mesh-Netzwerk (112) und das mindestens eine Gateway-Gerät (130), wobei die Gerätedaten den Signalstärkewert des erkannten Werbesignals und die Kennung des erkannten Werbesignals umfassen,
wobei die Recheneinheit (120) so konfiguriert ist, dass sie einen Standort des Objekts (142) basierend auf den bereitgestellten Gerätedaten definiert, die mit dem an dem Objekt (142) angebrachten Tag-Gerät (140) verknüpft sind.

2. System (100) gemäß Anspruch 1, wobei die Recheneinheit (120) dazu konfiguriert ist, den Standort des Objekts (142) basierend auf den Signalstärkewerten zu definieren, die in den von mindestens drei Empfängergeräten (110a-110n) bereitgestellten Gerätedaten enthalten sind.

3. System (100) gemäß Anspruch 1 oder 2, wobei die Recheneinheit (120) dazu konfiguriert ist, die Signalstärkewerte zu filtern, bevor der Standort des Objekts (142) definiert wird.

4. System (100) gemäß einem der vorhergehenden Ansprüche, wobei die Gerätedaten außerdem einen Zeitstempel umfassen, der einen Erfassungszeitpunkt des Werbesignals angibt, und wobei die Recheneinheit (120) außerdem dazu konfiguriert ist, den Standort des Objekts (142) zu einem oder mehreren bestimmten Zeitpunkten und/oder während eines bestimmten Zeitraums zu definieren.

5. System (100) gemäß einem der vorhergehenden Ansprüche, wobei die ein oder mehreren Tag-Geräte (140) jeweils zusätzlich ein oder mehrere Sensorgeräte umfassen, die dazu konfiguriert sind, umweltbezogene Informationen über die Umgebung des Tag-Geräts (140) bereitzustellen, und wobei die Gerätedaten zusätzlich die umweltbezogenen Informationen umfassen.

6. System (100) gemäß einem der vorhergehenden Ansprüche, wobei jedes Empfängergerät (110a-110n) von einem Aufzugssteuerungsbus mit Strom versorgt wird.

7. System (100) gemäß einem der vorhergehenden Ansprüche, wobei die Recheneinheit (120) eine Aufzugssteuereinheit oder eine externe Recheneinheit ist, die über das mindestens eine Gateway-Gerät (130) mit dem Aufzugssystem (100) verbunden ist.

8. System (100) gemäß einem der vorhergehenden Ansprüche, wobei das drahtlose Mesh-Netzwerk (112) auf einem Bluetooth-Kommunikationsprotokoll basiert.

9. Verfahren zur Objektverfolgung mit einem Aufzugssystem (100) mit einer Objektverfolgungsfunktionalität, **dadurch gekennzeichnet, dass** das Verfahren Folgendes umfasst:
Überwachen (202) von Werbesignalen durch jedes einer Vielzahl von Empfängergeräten (110a-110n), die von einem oder mehreren Tag-Geräten (140) gesendet werden, die jeweils an einem Objekt (142) angebracht sind, innerhalb einer Betriebsreichweite des Empfängergeräts (110a-110n), wobei mindestens ein Aufzugsschnittstellengerät des Aufzugsystems (100) auf jedem Stockwerk (106a-106n) ein Empfängergerät der Vielzahl von Empfängergeräten (110a-110n) umfasst und wobei jedes Werbesignal eine Kennung zum Identifizieren des Tag-Geräts (140) umfasst, das das Werbesignal sendet;
Bereitstellen (204) von mit jedem erkannten Werbesignal verknüpften Gerätedaten durch jedes der mehreren Empfängergeräte (110a-110n) an eine Recheneinheit (120) über ein drahtloses Mesh-Netzwerk (112), das durch die mehreren Empfängergeräte (110a-110n) gebildet wird, und über mindestens ein Gateway-Gerät (130), das eine Verbindung zwischen dem drahtlosen Kommunikationsnetzwerk (112) und der Recheneinheit (120) bereitstellt, wobei die Gerätedaten den Signalstärkewert des erkannten Werbesignals und die Kennung des erkannten Werbesignals umfassen; und
Definieren (206) eines Standorts des Objekts (142) durch die Recheneinheit (120) auf der Grundlage der bereitgestellten Gerätedaten, die mit dem an dem Objekt (142) angebrachten Tag-Gerät (140) verknüpft sind.

10. Verfahren nach Anspruch 9, wobei das Bestimmen des Standorts des Objekts (142) das Bestimmen des Standorts des Objekts (142) basierend auf den Signalstärkewerten umfasst, die in den von mindestens drei Empfängergeräten (110a-110n) bereitgestellten Gerätedaten enthalten sind.

11. Verfahren nach Anspruch 9 oder 10, ferner umfassend das Filtern der Signalstärkewerte vor dem Definieren des Standorts des Objekts (142).

12. Verfahren nach einem der Ansprüche 9 bis 11, wobei die Gerätedaten ferner einen Zeitstempel umfassen, der einen Erfassungszeitpunkt des Werbesignals angibt, und wobei das Verfahren ferner das Definieren des Standorts des Objekts (142) durch die Recheneinheit (120) zu einem oder mehreren bestimmten Zeitpunkten und/oder während eines bestimmten Zeitraums umfasst.

13. Verfahren nach einem der Ansprüche 9 bis 12, das außerdem das Bereitstellen umweltbezogener Informationen über die Umgebung des genannten Tag-Geräts (140) durch ein oder mehrere Sensorgeräte des einen oder der mehreren Tag-Geräte (140) umfasst, wobei die Gerätedaten außerdem die umweltbezogenen Informationen umfassen.

14. Verfahren nach einem der Ansprüche 9 bis 13, wobei jedes Empfängergerät (110a-110n) von einem Aufzugssteuerbus mit Strom versorgt wird.

15. Verfahren nach einem der Ansprüche 9 bis 14, wobei die Recheneinheit (120) eine Aufzugssteuereinheit oder eine externe Recheneinheit ist, die über das mindestens eine Gateway-Gerät (130) mit dem Aufzugssystem (100) verbunden ist.

16. Verfahren nach einem der Ansprüche 9 bis 15, wobei das drahtlose Mesh-Netzwerk (112) auf einem Bluetooth-Kommunikationsprotokoll basiert.

## Revendications

1. Système d'ascenseur (100) ayant une fonctionnalité de suivi d'objet, le système d'ascenseur (100) comprenant :
au moins une cage d'ascenseur (102) le long de laquelle au moins une cabine d'ascenseur (104) est conçue pour se déplacer entre une pluralité d'étages (106a-106n),
au moins un dispositif d'interface d'ascenseur à chaque étage (106a-106n) comprenant un dispositif récepteur parmi une pluralité de dispositifs récepteurs (110a-110n), dans lequel la pluralité de dispositifs récepteurs (110a-110n) forment un réseau maillé sans fil (112),
une unité de calcul (120),
au moins un dispositif de passerelle (130) pour la fourniture d'une connexion entre le réseau maillé sans fil (112) et l'unité de calcul (120), et
un ou plusieurs dispositifs d'étiquette (140), chacun fixé à un objet (142),
dans lequel chacun de la pluralité de dispositifs récepteurs (110a-110n) est configuré pour :
surveiller les signaux d'avertissement transmis par l'un ou les plusieurs dispositifs d'étiquette (140) dans une plage de fonctionnement dudit dispositif récepteur (110a-110n), dans lequel chaque signal d'avertissement comprend un identifiant pour identifier le dispositif d'étiquette (140) transmettant ledit signal d'avertissement, et
fournir des données de dispositif associées à chaque signal d'avertissement détecté à l'unité de calcul (120) via le réseau maillé sans fil (112) et au moins un dispositif de passerelle (130), dans lequel les données de dispositif comprennent la valeur d'intensité du signal d'avertissement détecté et l'identifiant du signal d'avertissement détecté,
dans lequel l'unité de calcul (120) est configurée pour définir un emplacement de l'objet (142) sur la base des données de dispositif fournies associées au dispositif d'étiquette (140) fixé audit objet (142).

2. Système (100) selon la revendication 1, dans lequel l'unité de calcul (120) est configurée pour définir l'emplacement de l'objet (142) sur la base des valeurs d'intensité du signal comprises dans les données de dispositif fournies par au moins trois dispositifs récepteurs (110a-110n).

3. Système (100) selon la revendication 1 ou 2, dans lequel l'unité de calcul (120) est configurée pour filtrer les valeurs d'intensité du signal avant de définir l'emplacement de l'objet (142).

4. Système (100) selon l'une quelconque des revendications précédentes, dans lequel les données de dispositif comprennent également un horodatage indiquant un moment de détection du signal d'avertissement, et dans lequel l'unité de calcul (120) est également configurée pour définir l'emplacement de l'objet (142) à un ou plusieurs instants spécifiques et/ou pendant une période de temps spécifique.

5. Système (100) selon l'une quelconque des revendications précédentes, dans lequel l'un ou les plusieurs dispositifs d'étiquette (140) comprennent également chacun un ou plusieurs dispositifs de capteur configurés pour fournir des informations relatives à l'environnement sur l'environnement dudit dispositif d'étiquette (140), et dans lequel les données du dispositif comprennent également les informations relatives à l'environnement.

6. Système (100) selon l'une quelconque des revendications précédentes, dans lequel chaque dispositif récepteur (110a-110n) est alimenté par un bus de commande d'ascenseur.

7. Système (100) selon l'une quelconque des revendications précédentes, dans lequel l'unité de calcul (120) est une unité de commande d'ascenseur ou une unité de calcul externe reliée au système d'ascenseur (100) via l'au moins un dispositif de passerelle (130).

8. Système (100) selon l'une quelconque des revendications précédentes, dans lequel le réseau maillé sans fil (112) est basé sur un protocole de communication Bluetooth.

9. Procédé de suivi d'objet avec un système d'ascenseur (100) ayant une fonctionnalité de suivi d'objet, **caractérisé en ce que** le procédé comprend :
la surveillance (202), par chacun d'une pluralité de dispositifs récepteurs (110a-110n), de signaux d'avertissement transmis, par un ou plusieurs dispositifs d'étiquette (140) chacun fixé à un objet (142), dans une plage de fonctionnement dudit dispositif récepteur (110a-110n), dans lequel au moins un dispositif d'interface d'ascenseur du système d'ascenseur (100) à chaque étage (106a-106n) comprend un dispositif récepteur de la pluralité de dispositifs récepteurs (110a-110n), et dans lequel chaque signal d'avertissement comprend un identifiant pour l'identification du dispositif d'étiquette (140) transmettant ledit signal d'avertissement ;
la fourniture (204), par chacun des dispositifs récepteurs de la pluralité (110a-110n), des données de dispositif associées à chaque signal d'avertissement détecté à une unité informatique (120) via un réseau maillé sans fil (112) formé par la pluralité de dispositifs récepteurs (110a-110n) et via au moins un dispositif passerelle (130), qui fournit une connexion entre le réseau de communication sans fil (112) et l'unité informatique (120), dans lequel les données de dispositif comprennent la valeur d'intensité du signal d'avertissement détecté et l'identifiant du signal d'avertissement détecté ; et
la définition (206), par l'unité de calcul (120), d'un emplacement de l'objet (142) sur la base des données de dispositif fournies associées au dispositif d'étiquette (140) fixé audit objet (142).

10. Procédé selon la revendication 9, dans lequel la définition de l'emplacement de l'objet (142) comprend la définition de l'emplacement de l'objet (142) sur la base des valeurs d'intensité du signal comprises dans les données de dispositif fournies par au moins trois dispositifs récepteurs (110a-110n).

11. Procédé selon la revendication 9 ou 10, comprenant également le filtrage des valeurs d'intensité du signal avant de définir l'emplacement de l'objet (142).

12. Procédé selon l'une quelconque des revendications 9 à 11, dans lequel les données de dispositif comprennent également un horodatage indiquant un moment de détection du signal d'avertissement, et dans lequel le procédé comprend également la définition, par l'unité de calcul (120), de l'emplacement de l'objet (142) à un ou plusieurs instants spécifiques et/ou pendant une période de temps spécifique.

13. Procédé selon l'une quelconque des revendications 9 à 12, comprenant également la fourniture, par un ou plusieurs dispositifs de capteur de l'un ou des plusieurs dispositifs d'étiquette (140), d'informations relatives à l'environnement concernant l'environnement dudit dispositif d'étiquette (140), dans lequel les données du dispositif comprenant également les informations relatives à l'environnement.

14. Procédé selon l'une quelconque des revendications 9 à 13, dans lequel chaque dispositif récepteur (110a-110n) est alimenté par un bus de commande d'ascenseur.

15. Procédé selon l'une quelconque des revendications 9 à 14, dans lequel l'unité de calcul (120) est une unité de commande d'ascenseur ou une unité de calcul externe reliée au système d'ascenseur (100) via l'au moins un dispositif de passerelle (130).

16. Procédé selon l'une quelconque des revendications 9 à 15, dans lequel le réseau maillé sans fil (112) est basé sur un protocole de communication Bluetooth.
